# EUROPEAN PATENT APPLICATION

(11) **EP 4 418 643 A1**
(43) Date of publication of application: **21.08.2024**
(21) Application number: 23156781.9
(22) Date of filing: 15.02.2023
(51) Int. Cl.: H04M 3/22, H04M 3/436, H04L 9/40

(54) **CALLING LINE IDENTITY SPOOF DETECTION IN THE PRESENCE OF REPEAT CALLS**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer implemented method of processing calls in a telephone network, the method comprising: identifying a plurality of calls that have been made by a particular telephone number to destination telephone numbers in the telephone network; dividing the plurality of calls into one to N subsets of calls corresponding to a first to Nth occurrence of the calls to the destination telephone numbers, wherein the first subset of calls includes a sequence of the calls to the destination telephone numbers occurring for a first time; determining whether the sequence of calls in at least one of the subsets of calls corresponds to a correct order for calling those destination telephone numbers, wherein the correct order is determined based on a predetermined rule for ordering destination telephone numbers in the telephone network and wherein a party that is authorised to use the particular telephone numbers follows the correct order; and determining that one or more of the calls were made by spoofing the particular telephone number if the sequence in which the calls in the at least one subset were placed does not correspond to a correct order.

## Description

### TECHNICAL FIELD

The present invention relates to processing calls in a telephone network. In particular, the present invention relates to methods of processing calls such that telephone number spoofing can be detected.

### BACKGROUND

A call placed in a telephone network typically includes information regarding the originating number (or network number), a separate caller identifier number (or referred to as the caller ID or presentation number) and the number being called (or referred to as the destination telephone number). Caller ID spoofing is a practice of causing a telephone network to indicate to the receiver of a telephone call that the number from which an originator of the call is calling is different from their true originating number. A call in which the Caller Identifier Number reflects a different number (the spoofed number) from the true originating number may be referred to as a spoofed call.

Under ideal conditions, a network operator of a telephone network should be able to distinguish calls where the Caller ID has been altered by checking whether it matches the originating number information for the call. However, in a deregulated world, with many operators, each having different practices and providing varying level of assurance on the validity of an originating number or Caller ID, it can be hard for a network operator to ensure that a specified originating number (as well as other fields in the signalling for a call) is correct, especially where calls originate from a different network. This issue is amplified by the advent of IP telephony. It can therefore be hard to identify calls where Caller ID spoofing is occurring.

Whilst there are various legitimate uses of Caller ID spoofing, it is increasingly being used for nefarious purposes. For example, various techniques for blocking calls (such as by blacklisting or whitelisting numbers) from undesirable callers are known. However, Caller ID spoofing may be used as part of an attempt to circumvent such blocking systems by making the calls appear to come from a number belonging to a reputable company whose calls would not be blocked. Another use of Caller ID spoofing is as part of fraudulent social engineering techniques designed to convince the called party that the caller is from the reputable company whose number is being spoofed in order to convince them to carry out actions or divulge confidential information that they would not otherwise do. Since fraudsters carrying out this kind of activity also typically make use of automated calling in order to reach their victims, spoofing the Caller ID of a reputable company may also help them avoid attempts to block unwanted automated calls. In other situations, a more malicious entity might spoof the Caller ID's of vital organisations, such as hospitals, the police, banks and so on in order to fill the network with deceptive calls resulting in a denial of service.

Therefore, methods have been developed for providing assurance that a series of calls are likely to have come from a genuine source (such as the owner or authorised user of a telephone number) or that indicates that spoof calls are likely being made that provide the illusion of coming from that source. For example, European patent application EP3949364 discloses a method whereby outgoing calls are sequenced such that their corresponding destination numbers makes a descending sequence. Thus, when call records for the calling line identify in question are observed by the network operator, they can check whether the descending sequence has been preserved.

However, the method disclosed in EP3949364 may be limited in that for a given sequence of calls, each destination can only be called once. Repeated calls to any destination would disrupt the descending sequence and thus would appear to be spoofed traffic. A simple solution to solve this problem is to wait until all the target destinations have been called exactly once and then start a new descending sequence for destinations that are to be called for a second time (for example, because no answer was received at the first attempt). This places a considerable restriction on the operator of the calling campaign in terms of when they can initiate repeat calls which is likely to impact on the success of those calls. In addition, a mechanism would be required to signal to the network operator that a new sequence is now beginning.

Therefore, an improved mechanism is desirable for allowing the genuine caller to make repeat calls to some or all destinations without having to reset the overall sequence.

### SUMMARY OF INVENTION

The invention is defined in the independent claims. Optional features are set out in the dependent claims.

According to a first aspect, a computer implemented method of processing calls in a telephone network is provided, the method comprising: identifying a plurality of calls that have been made by a particular telephone number to destination telephone numbers in the telephone network; dividing the plurality of calls into one to N subsets of calls corresponding to a first to Nth occurrence of the calls to the destination telephone numbers, wherein the first subset of calls includes a sequence of the calls to the destination telephone numbers occurring for a first time; determining whether the sequence of calls in at least one of the subsets of calls (such as, but not limited to, the first subset of calls) corresponds to a correct order for calling those destination telephone numbers, wherein the correct order is determined based on a predetermined order for calling destination telephone numbers in the telephone network and wherein a party that is authorised to use the particular telephone numbers follows the correct order; and determining that one or more of the calls were made by spoofing the particular telephone number if the sequence in which the calls in the at least one subset subset were placed does not correspond to a correct order.

According to a second aspect, the computer implemented method of processing calls in a telephone network is provided according to the first aspect wherein the step of determining whether the sequence of calls in at least one of the subsets of calls corresponds to a correct order for calling those destination telephone numbers is performed for the first subset of calls (i.e. for the subset corresponding to the first appearance of each respective number), A Nth subset of calls includes a sequence of the calls to the destination telephone numbers occurring for a Nth time. The method further comprises: determining whether the sequence in each of the N subsets of calls separately corresponds to a correct order for calling those destination telephone numbers, wherein the correct order is determined based on the predetermined order for calling destination telephone numbers in the telephone network; and determining that one or more of the calls were made by spoofing the particular telephone number if the sequence in which the calls in any subsets of the N subsets were placed does not correspond to a correct order.

Embodiments may provide for: an improved mechanism for spoofed calls detection in the presence of repeat calls wherein any repeated destination numbers are considered separately without having to reset the overall sequence of the calls to be analysed.

According to a third aspect, there is provided a computer system comprising a processor and a memory storing computer program code for performing the steps of the first or second aspect.

According to a fourth aspect, there is provided a computer program which, when executed by one or more processors, is arranged to carry out a method of the first or second aspects.

### BRIEF DESCRIPTION OF THE DRAWINGS

The disclosure will be further described, by way of example only, with reference to the accompanying drawings, in which:
Figure 1 illustrates an exemplary telephone network within which embodiments of the invention may operate;
Figure 2 illustrates a flowchart 100 of a conventional method of processing calls in a telephone network;
Figure 3 illustrates an exemplary sequence of calls 200 being divided into two subsets and being determined to have no spoofed call according to aspects of the invention;
Figure 4 illustrates an exemplary sequence of calls 300 being divided into three subsets and being determined to have a spoofed call according to aspects of the invention;
Figure 5 illustrates a flowchart 400 of a method of processing calls in a telephone network based on a first subset of calls according to aspects of the invention;
Figure 6 illustrates a flowchart 500 of a method of processing calls in a telephone network based on N subsets of calls according to aspects of the invention;
Figure 7 illustrates a plot showing the detection rate of the spoofed calls with respect to the fraction of spoofed calls in the telephone network.

### DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

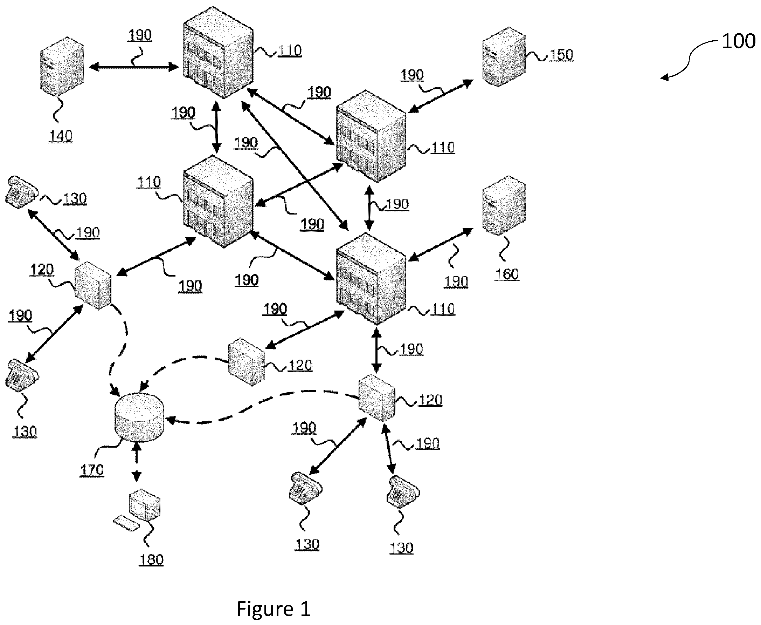

Figure 1 is a schematic depiction of an exemplary telephone network 100 within which embodiments of the invention may operate. The exemplary telephone network 100 may also be referred to as a communications network. The exemplary telephone network 100 is a conventional telephone network comprising a plurality of core exchanges 110, a plurality of local exchanges 120, a plurality of customer telephony terminals 130, one or more domestic gateways 140, one or more international gateways 150, one or more voicemail servers 160, one or more call data stores 170 and one or more analyst terminals 180.

The core exchanges 110 are interconnected by a plurality of communications links 190. Each of the plurality of core exchanges 110 are further connected to one or more local exchanges by further communications links 190 (although, for the sake of clarity, not all of the core exchanges 110 illustrated in Figure 1 are shown as being connected to local exchanges 120).

The local exchanges 120 are each connected to a respective core exchange 110 via a respective communication link 190. Each of the local exchanges 120 is also connected to a respective subset of the customer telephony terminals 130 via yet further communications links 190 (although again, for the sake of clarity, this is not shown for each of the local exchanges 120 in Figure 1).

The customer telephony terminals 130 are each connected to a respective local exchange 120 via a respective communication link 190. The customer telephony terminals 130 can include devices such as telephones, private branch exchanges (PBX), conference phones, computer diallers, fax machines, modems, answering machines and so on.

The domestic gateways 140 are each connected to one or more other telephony networks (not shown) in the same country. The domestic gateways 140 enable calls to be routed between the telephone network 100 and the other telephony networks. That is to say, the domestic gateways 140 enable the customer telephony terminals 130 within the telephone network 100 to place calls to and/or receive calls from telephony terminals within the other telephony networks.

The international gateways 150 are each connected to one or more other international telephony networks (not shown). The international gateways 150 enable calls to be routed between the telephone network 100 and the other international telephony networks. That is to say, the international gateways 150 enable the customer telephony terminals 130 within the telephone network 100 to place calls to and/or receive calls from telephony terminals within the other international telephony networks.

The voicemail servers 160 are connected to the telephone network 100 via respective communications links 190. They may be connected at any point in the telephone network 100, such as at core exchange 110 as shown in Figure 1. Although not illustrated in Figure 1, voicemail servers 160 may also or alternatively be connected to a local exchange 120. Each of the voicemail servers 160 provides a voicemail facility to a plurality of customers of the telephone network 100. For example, a voicemail server 160 connected to a local exchange 120 might provide a voicemail facility for the customers whose telephony terminals 130 are directly connected to that local exchange 120. Of course it will be appreciated that a multitude of other arrangements are possible.

The call data stores 170 each store a plurality of call data records representing some or all of the telephony calls made over the telephone network 100 for a given period of time. Each call data record will comprise the telephone number used by the calling party, the telephone number of the called party, the time that the call started and the time that the call was terminated (or a time that the call started or ended and a duration of the call). The call data is provided periodically to the data stores by the one or more local exchanges 120 (and/or, in some embodiments, by the core exchanges 110) as calls are placed, connected and terminated in the telephone network 100. The provision of the call data is provided to the data stores 170 using any appropriate means of communication, such as by using a data network that is separate from the telephone network 100. As will be appreciated, each data store, may receive data from different sets of local exchanges 170, such that call data for the network 100 as a whole is spread across the data stores 170.

The analyst terminals 180 are computer systems which can access the data stored in the data stores 170 (or, at least, in some of the data stores 170). Programs may run on the analyst terminals 180 to analyse the call data stored in the data stores 170 including, for example, to classify whether particular callers are a source of automated telephone calls, in accordance with embodiments of this invention.

As is well known, calls made by a customer telephony terminal 130 are initially handled by the local exchange 120 to which the terminal 130 is connected via its respective communication link 190. If the destination of the call is another terminal 130 that is connected to the same local exchange 120, that local exchange 120 can route the call directly to its destination without involving any of the other components of the telephone network 100. Otherwise, if the destination terminal 130 is not on the same local exchange 120, the local exchange 120 routes the call to the respective core exchange 110 to which it is connected to handle the further routing of the call. If the call is destined for another terminal 130 on the network, the core exchange 110 routes the call, possibly via one of the other core exchanges 110, to the local exchange 120 to which that terminal 130 is connected. However, if the call is destined for a terminal on another network, the core exchange 110 routes the call to one of the gateways for onward routing to that network. In some cases, instead of routing a call to a customer's telephony terminal 130, the telephone network 100 can instead route a call to one of the voicemail servers 160 which provides a voicemail facility for that customer. The caller can then leave a message which will be recorded by the voicemail server 160 and can later be replayed by the customer at a time convenient to them. If a call is routed to the voicemail a notification such as a computer or smartphone notification, an SMS message and/or an email will be sent to the customer informing them of the presence of an unheard voicemail on the voicemail server 160. The decision to route a call to one of the voicemail servers 160 may be made if, for example, there is no answer from the customer's telephony terminal 160 after a predetermined number of rings or if a customer has specified that all calls should be redirected to their voicemail.

It will be understood that the telephone network 100 illustrated in Figure 1 is merely exemplary and that various modifications may be made according to the needs of a specific telephone network. In some embodiments, various components described above may be absent from the telephone network 100. For example, the network 100 might not include domestic gateways 140 and/or international gateways 150 if such connectivity to other networks is not required. Similarly, the telephone network 100 might not include voicemail servers 160 if no voicemail service is offered to customers of the network 100. Furthermore a wide range of other components not illustrated in figure 1 may be present in the telephone network 100. Indeed, in general, it will be appreciated that there are many different forms that telephone network 100 may take using different combinations, numbers, types and arrangements of these components.

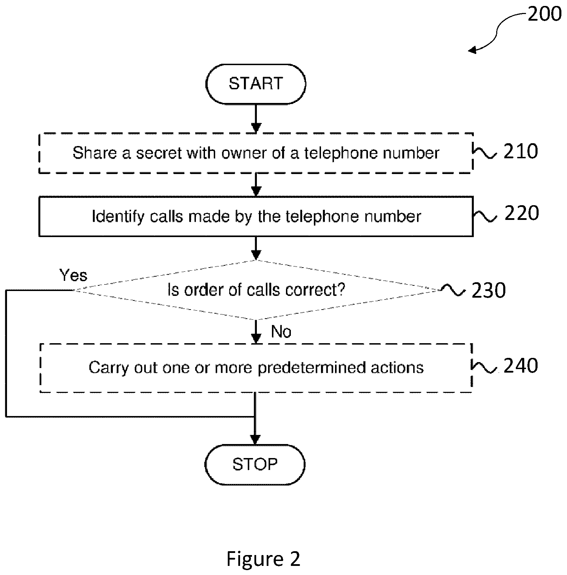

Figure 2 shows a flowchart outlining a typical method 200 to process calls in a communications network, such as the network 100 illustrated in Figure 1. The method 200 starts at an optional operation 210.

At optional operation 210, the method 200 shares a secret with a party that is authorised to use the particular telephone number (e.g. the owner of the telephone number). The secret which is shared enables a predetermined rule for calling a set of telephone numbers to be generated. In some embodiments, the secret is provided by the party that is authorised to use the telephone number (for example, the party may generate the secret and provide it to the network). In other embodiments, the secret is provided by the network (for example, the network may generate the secret and provide it to the network). Any suitable secure mechanism may be used to exchange the secret between the network and the party that is authorised to use the telephone number, as will be known by the skilled person. The secret may be an operation that produces a numerical value from a telephone number. That is to say, it is a function which takes a telephone number as an input and outputs a numerical value. The predetermined rule may be for ordering the telephone numbers which can therefore be determined by the associated numerical values that are produced when the telephone numbers are processed by the operation. In some embodiments, the predetermined rule for ordering the telephone numbers may be using an ascending or descending order based on those values. The secret may comprise a cipher or hashing function (or any other kind of mapping from telephone numbers to another number) which would also be applied to the observed sequence of destination numbers before analysing the sequence for correctness. It will be understood that the order may not be limited to an ascending or descending order. Any rules or orders for calling a set of destination telephone numbers may be used.

As an example, a mapping may be used to map the local customer element of a telephone number (i.e. the number excluding the standard area codes and so on). This mapping could, for example, map the numbers 00-99 to a different ordering of the numbers 00-99, that is to say the number 00 might be mapped to the number 21, the number 01, might be mapped to the number 79, the number 02 might be mapped to the number 34 and so on. This mapping can then be used, for example, to map pairs of digits in the local customer element of a telephone number to a numerical value, thereby yielding a different number for each telephone number. For example, if the local customer element of a telephone number has 6 digits in the format ABCDEF, the first two digits of the telephone number AB could be mapped to a different number A' B', the second two digits of the telephone number CD could be mapped to a different number C'D' and the final two digits of the telephone number EF could be mapped to a different number E'F', thereby yielding the number A'B'C'D'E'F' for the telephone number. The same mapping could be used for each pair of numbers, or alternatively different mappings could be provided for each pair (that is a first mapping could be provided for mapping digits AB, a second mapping could be provided for mapping digits CD and a third mapping could be provided for mapping digits EF).

It will be appreciated that any appropriate secret (including any suitable hashing, mapping and/or cipher functions) that enables a particular ordering of telephone numbers to be determined can be used. In another example, the secret is simply a list of telephone numbers ordered in a particular way. That is to say, a list of telephone numbers that a party wishes to call may be provided to the network and the network may return that list of telephone numbers ordered in an order that they are to be called.

Having shared a secret with the owner of a telephone number, the method 200 proceeds to an operation 220. It will be appreciated that in some embodiments, the predetermined ordering of telephone numbers could simply be widely published (such as, for example, by a network operator stating that telephone numbers should be called in numerical order (ascending or descending) of the telephone numbers themselves). In such embodiments, it is not necessary to share a secret with the owner of the telephone number and the method 200 can start with operation 220. Nonetheless, it is believed that by using a secret shared with the owner of a telephone number (at operation 210), the method 200 will be better able to detect the presence of spoofed calls for that telephone number by making it harder for a party placing spoofed calls to attempt to place calls in a correct order.

In some embodiments, the sharing of the secret at step 210, may be considered to indicate to the network 100 that the owner of the telephone number is about to start a calling campaign which they would like the network to monitor to detect any spoofed calls. In other embodiments, the owner of the telephone number may notify the network separately that the calling campaign is about to begin. Of course, it is not necessary for the network to be notified of calling campaigns in order for the invention to work, however doing so may be useful to allow resources to be allocated for the monitoring of numbers at appropriate times. However, in other embodiments, the network may monitor the calls without receiving any notification from the owner of a telephone number.

At operation 220, the method 200 identifies a plurality of calls that have been made by a particular telephone number to telephone numbers in the communications network. For example, the call data records relating to that telephone number may be retrieved from the call data stores 170. As will be appreciated, these call data records will include any calls which were made by spoofing the telephone number, as well as those that were genuinely made by the owner of the telephone number.

At operation 230, the method 200 determines whether a sequence in which the calls were placed corresponds to a correct order for calling those telephone numbers. That is to say, whether the sequence of calls is a subsequence of the predetermined order for calling the telephone numbers in the communications network. In other words, the method 200 checks each call in the sequence, to ensure that it is to a telephone number that appears later in the predetermined order than a previously called telephone number in the sequence (i.e. that the called telephone number does not appear earlier in the predetermined order than a previously called number in the sequence of calls that were made). In embodiments where a secret is shared with the owner or authorised user of the telephone number, the method 200 uses that secret at operation 230 to determine whether the sequence of calls that were made follows a correct order. For example, the method 200 may use an operation (in embodiments where the secret is an operation such as a mapping, cipher or hash) to determine the number associated with each of the called telephone numbers - these numbers can then be used to determine whether the calls were placed in a correct order (e.g. such that the numbers associated with each called telephone number are in an ascending (or descending) order).

If, at operation 230, the method 200 determines that the sequence in which the calls were placed is not correct (that is to say that it does not correspond to the predetermined order for calling the telephone numbers in the communications network), then the method 200 determines that one or more of the plurality of calls were made by spoofing the particular telephone number under consideration.

Accordingly, in some embodiments, the method 200 may proceed to an operation 240 in which it causes one or more predetermined actions to be taken in light of this determination. For example, the method 200 can notify an operator of the network and/or an owner (and/or authorised user) of the telephone number that calls are being made by spoofing that telephone number, such as by raising an alarm. The method 200 then ends.

However, if it is determined at operation 200 that the sequence in which the calls were placed is correct according to the predetermined order, then it is determined that no spoofing is taking place. Accordingly, in some embodiments, the method 200 ends. However, in other embodiments (not shown by the flowchart of Figure 2), various predetermined actions may be taken following a determination that no spoofing is taking place, such as providing the owner of the telephone number with a positive indication that no spoofing of their number is occurring.

The method described above may be limited in that for a given sequence of calls, each destination can only be called once. Repeated calls to any destination would disrupt the descending sequence and thus would appear to be spoofed traffic. One solution to solve this problem is to wait until all the target destinations have been called exactly once and then start a new ordered (e.g. descending) sequence for destinations that are to be called for a second time (for example, because no answer was received at the first attempt). This places a restriction on the operator of the calling campaign in terms of when they can initiate repeat calls which is likely to impact on the success of those calls. In addition, a mechanism is required to signal to the network operator that a new sequence is now beginning.

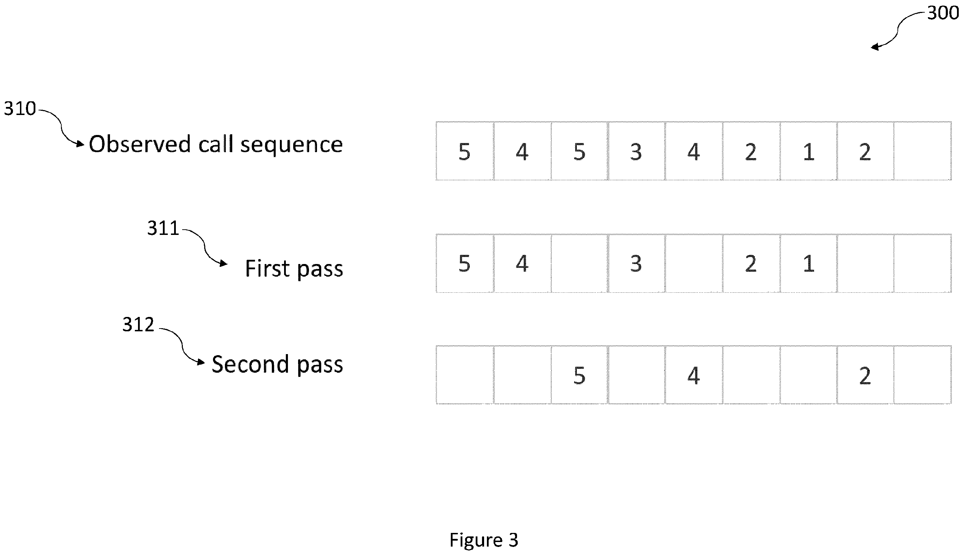

Figure 3 is a schematic illustration of exemplary method 300 to process a set of calls being placed within a telephone network, such as the telephone network 100, in accordance with embodiments of the invention. As shown in Figure 3, a sequence of calls 310 is observed by the network operator. The observed calls may be made by a particular telephone number to different destination telephone numbers. Numerical values may be produced to represent corresponding destination telephone numbers in a predetermined order shared between a party that is authorised to use the particular telephone number and a network operator.

The network operator of a telephone network 100 through which some of the calls are processed may not see all of the calls that are made by the party which is authorised to use the particular telephone number or the party which makes spoofed calls. This is because, either the party which is authorised to use the particular telephone number or the party which makes spoofed calls, or both, may belong to a different network than the telephone network 100 that is outside the control of the network operator. Similarly, some of the telephone numbers called by the party which is authorised to use the particular telephone number or the party which makes spoofed calls, or both may also be outside of the telephone network 100. Accordingly, the network operator may only be aware of those calls which are made to destination telephone numbers within the telephone network 100 (and not other calls that are placed to numbers belonging to other networks). Therefore, the sequence of calls 310 represents the calls as seen by the network operator, which could be an amalgamation of calls placed by the party which is authorised to use the particular telephone number and the party which makes spoofed calls. The observed sequence of calls 310 may only include calls placed by the party which is authorised to use the particular telephone number with the presence of repeat calls to one or more destination telephone numbers.

In Figure 3, the observed calls includes a sequence of numerical values: 5, 4, 5, 3, 4, 2, 1, 2. This identified sequence may then be divided into one or more subsets based on a time of occurrence of the numerical values. A first subset 311 may be identified to include a first occurrence of each numerical values 1 to 5. As shown in Figure 3, the "5" in the first position of the sequence 310, the "4" in the second position of the sequence 310, the "3" in the fourth position of the sequence 310, the "2" in the sixth position of the sequence 310, and the "1" in the seventh position of the sequence 310 are identified as the first occurrence of each numerical values 5, 4, 3, 2, and 1. Therefore, the first subset 311 may be identified to include the sequence "5, 4, 3, 2, 1".

Similarly, a second subset 312 may be subsequently identified to include a second occurrence of each numerical values 1 to 5. As shown in Figure 3, the "5" in the third position of the sequence 310, the "4" in the fifth position of the sequence, and the "2" in the eighth position of the sequence 310 are identified as the second occurrence of these numerical values. Therefore, the second subset 312 may be identified to include the sequence "5, 4, 2".

It may be examined whether all numerical values which represent the calls to the corresponding destination telephone numbers have been identified and included in one of the subsets. The dividing into subsets for the numerical values may be continued until all the values have been assigned to a subset. As shown in Figure 3, all the values have been assigned to a subset after producing two subsets. Therefore, the dividing of subsets may be stopped.

The divided first subset of calls and second subset of calls may then be treated independently. In some of the embodiments, the sequence of calls in the first subset 311 and the second subset 312 may be compared separately to the predetermined order wherein the party which is authorised to use the particular telephone number follows this predetermined order.

In the example shown in Figure 3, a descending sequence may be set as a predetermined order for calling those destination telephone numbers. Hence, the authorised party follows this correct order for making calls. In the first subset, 311 the sequence "5, 4, 3, 2, 1" correctly follows the descending order. Therefore, it may be determined that these five calls represented by the five numerical values are legitimate calls, and no spoofed calls are detected. In the second subset 312, the sequence "5, 4, 2" also correctly follows the predetermined descending order. Therefore, it may be determined that these three calls represented by the three numerical values are legitimate calls, and no spoofed calls are detected.

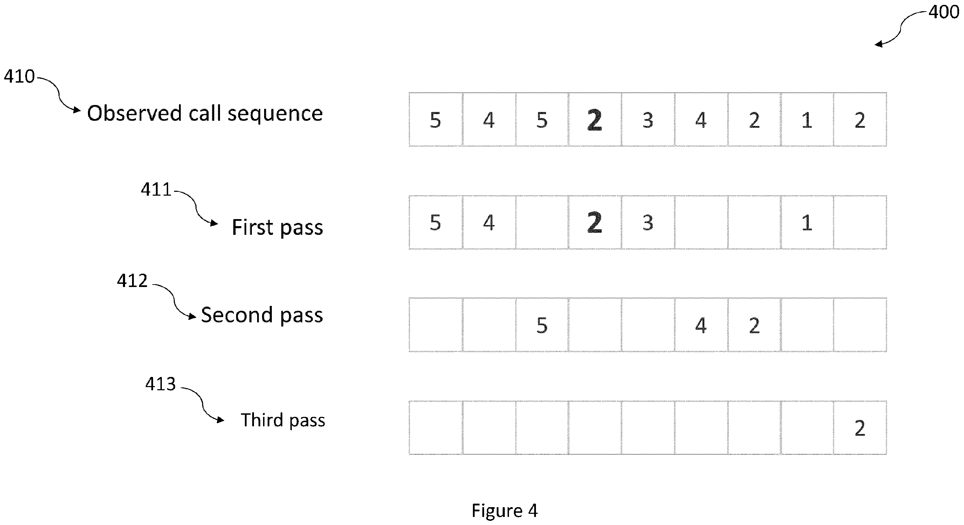

Figure 4 shows another schematic illustration of exemplary method 400 to process a set of calls being placed within a telephone network 100 in accordance with embodiments of the invention, in which a spoofed call may be detected. As shown in Figure 4, a sequence of calls 410 is observed by the network operator.

In Figure 4, the observed calls includes a sequence of numerical values: 5, 4, 5, 2, 3, 4, 2, 1, 2. The first instance of the value "2" represents a spoof call. This observed sequence may then be divided into one or more subsets based on a time of occurrence of the numerical values. A first subset 411 may be identified to include a first occurrence of each numerical values 1 to 5. As shown in Figure 4, the "5" in the first position of the sequence 410, the "4" in the second position of the sequence 410, the "2" in the fourth position of the sequence 410, the "3" in the fifth position of the sequence 410, and the "1" in the eighth position of the sequence 410 are identified as the first occurrence of each numerical values 5, 4, 3, 2, and 1. Therefore, the first subset 411 may be identified to include the sequence "5, 4, 2, 3, 1".

Similarly, a second subset 412 may be subsequently identified to include a second occurrence of each numerical values 1 to 5. As shown in Figure 4, the "5" in the third position of the sequence 410, the "4" in the sixth position of the sequence, and the "2" in the seventh position of the sequence 410 are identified as the second occurrence of these numerical values. Therefore, the second subset 412 may be identified to include the sequence "5, 4, 2".

As discussed above, the dividing of numbers into subsets may not be stopped until all the observed numerical values have been assigned to a subset. In this case, the "2" in the ninth position has not been included in any subset. Therefore, a third subset 413 may then be processed including only the "2" in the ninth position of the sequence.

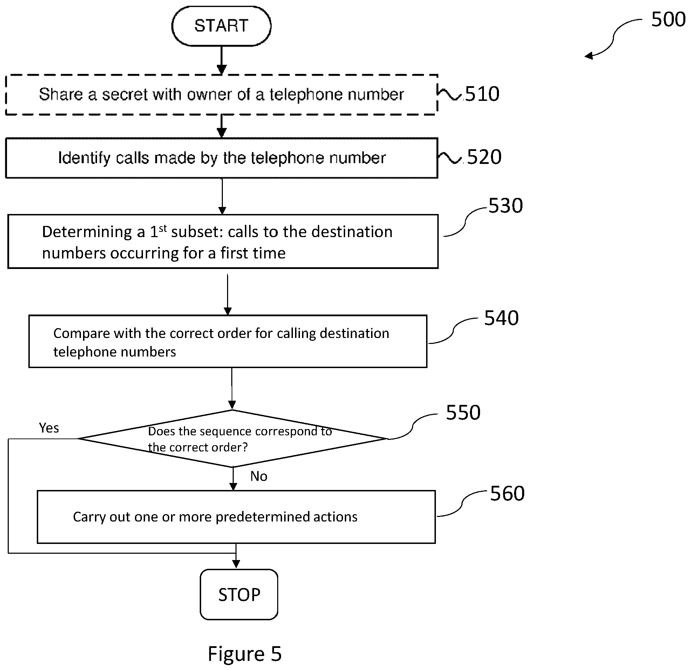

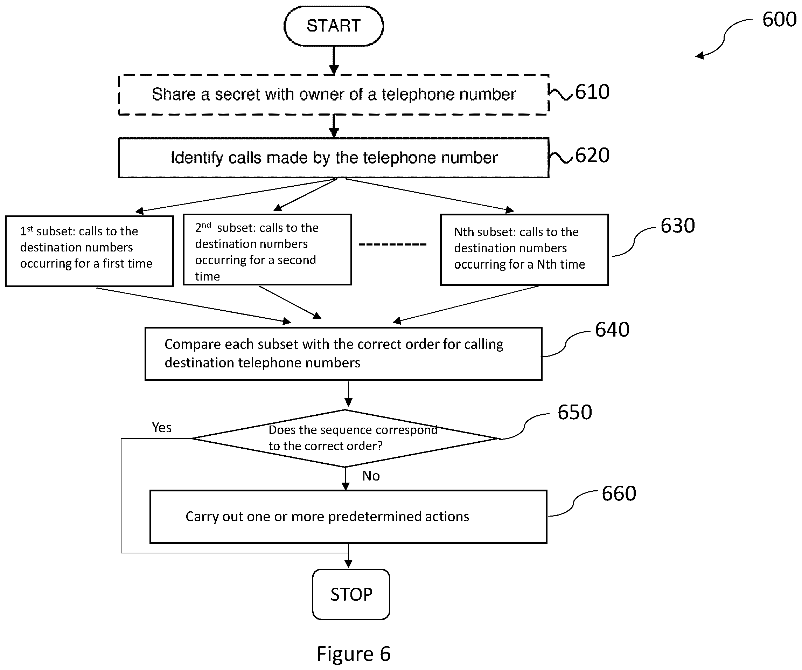

The above-mentioned two exemplary sequences of calls illustrated in Figures 3 and 4 will now be discussed further in conjunction with flowcharts shown in Figures 5 and 6.

Figure 5 is a flowchart illustrating a method 500 of processing calls in a telephone network, such as telephone network 100, according to embodiments of the invention. This method 500 is a development based on the method 200 illustrated in Figure 2.

As discussed above for the method 200 illustrated in Figure 2, the method 500 may begin with the optional operation 510 of sharing a secret with the owner or authorised user of a particular telephone number. The secret may be a predetermined rule for calling a set of destination telephone numbers. In some embodiments, the secret is provided by the party that is authorised to use the telephone number (for example, the party may generate the secret and provide it to the network). In other embodiments, the secret is provided by the network (for example, the network may generate the secret and provide it to the network). Any suitable secure mechanism may be used to exchange the secret between the network and the party that is authorised to use the telephone number, as will be known by the skilled person. The secret may be an operation that produces a numerical value from a telephone number. That is to say, it is a function which takes a telephone number as an input and outputs a numerical value. The predetermined rule may be for ordering the telephone numbers which can therefore be determined by the associated numerical values that are produced when the telephone numbers are processed by the operation. In some embodiments, the predetermined rule for ordering the telephone numbers may be using an ascending or descending order based on those values. The secret may comprise a cipher or hashing function (or any other kind of mapping from telephone numbers to another number). It will be understood that the order may not be limited to an ascending or descending order. Any rules or orders for calling a set of destination telephone numbers may be used. In particular, the rules also accommodate missing telephone numbers in a sequence provided that the relative ordering is maintained. That is, a rule may specify an ordering X₁, X₂, X₃ .... Xₙ but the rule is still adhered to even if certain numbers do not appear in the sequence. For example, X₃ should come after X₁, regardless of the presence or absence of X₂.

The method 500 then proceeds to an operation 520, which is also as discussed above in relation to the method 200 illustrated in Figure 2. In some embodiments, the method 500 may skip optional operation 510 and begin instead with operation 520 (for example, where the network operator widely publishes a technique for determining an ordering of making calls that is not specific to any one telephone number). Either way, after identifying previous calls that were ostensibly made using the particular telephone number (from the network operator's perspective) at operation 520, the method 500 then proceeds to an operation 530.

At operation 530, the method 500 may determine a first subset of calls from the identified calls made by the particular telephone number wherein the first subset includes calls to the destination numbers occurring for a first time. Examples of this first subset of calls are shown by the first subset 311 in Figure 3 and the second subset 411 in Figure 4. At operation 540, this determined first subset of calls may be compared with the correct predetermined rule for ordering the destination numbers according to the shared secret at step 510. It may be assumed that the authorised party for using the particular telephone number follows the predetermined order. Therefore, at operation 550, if the determined first subset of calls corresponds to the correct order, it is determined that the calls are made by the authorised party and all the calls in the first subset are legitimate. The method may therefore be finished. However, at operation 550, if the determined first subset of calls does not follow the correct order, it is determined that the subset contains spoofed call(s). Accordingly, a further step 560 may then be carried out to take actions for the detected spoofed calls.

The method 500 shown in Figure 5 is an exemplary illustration of the simplest option in which the first occurrence of all destination numbers are examined. In this case, repeat calls to destination number can therefore occur at any point in the sequence without appearing to be spoofed calls. However, a spoofer is then potentially free to make his own repeat calls safe in the knowledge that only the first call to any given destination is likely to be detected as spoof traffic.

An further method 600 is shown in Figure 6 according to embodiments of the present invention which treats first to Nth repeats independently and requires legitimate users to sequence calls such that each round of repeats follows the predetermined order. Method 600 may begin with the optional operation 610 of sharing a secret with the owner or authorised user of a particular telephone number. The method 600 then proceeds to an operation 620. In some embodiments, the method 600 may skip optional operation 610 and begin instead with operation 620 (for example, where the network operator widely publishes a technique for determining an ordering of making calls that is not specific to any one telephone number). Either way, after identifying previous calls that were ostensibly made using the particular telephone number (from the network operator's perspective) at operation 620, the method 600 then proceeds to an operation 630.

At operation 630, the method 600 may differ from the operation 530 of method 500 by determining N subsets (first, second, third ... Nth) of calls from the identified calls made by the particular telephone number. The first subset may include calls to the destination numbers occurring for a first time, the second subset may include calls to the destination numbers occurring for a second time and so on. As such, the Nth subset may include calls to the destination numbers occurring for a Nth time.

As discussed in Figure 3, it may be examined whether all numerical values which represent the calls to the corresponding destination telephone numbers have been identified and included in one of the subsets. The dividing of subsets for the numerical values may be continued until all the values have been assigned to a subset. As shown in Figure 3, all the values have been assigned to a subset after producing two subsets. Therefore, the dividing of subsets may be stopped.

At operation 640, the divided first to Nth subsets of calls may be separately compared with the correct predetermined rule for ordering the destination numbers according to the shared secret at step 610. It may be assumed that the authorised party for using the particular telephone number follows the predetermined order. Therefore, at operation 650, if the determined subsets of calls each corresponds to the correct order, it is determined that the calls are made by the authorised party and all the calls in the first subset are legitimate. The method may therefore be finished. However, at operation 650, if any of the determined subsets of calls does not follow the correct order, it is determined that the respective subset contains spoofed call(s). Accordingly, a further step 660 may then be carried out to take actions for the detected spoofed calls.

The one or more actions 660 carried out in response to detecting an incorrect sequencing may include identifying a specific calling line identity and to notify the relevant party responsible for making the genuine calls so they are aware their calls/identity is being impersonated. In addition, or alternatively, information about the level of detected spoof calls, can be recorded including, for example, time of occurrence etc. The call details can be aggregated and used to construct the profile of these calls over a period of time, such as over the day. For example, a plot may be obtained for the number of spoof calls per minute. Although some spoof calls may not be detected, the overall trend or 'shape' of the calls can be diagnostic of nuisance calling and therefore is further evidence that this is rogue traffic. The network that delivered this rogue traffic into the network can be identified and this may trigger further investigation as to the ultimate origin of the calls, for example so that action can be taken to block the source.

The checking of the call sequences could take place in real time, particularly when only a first subset of calls are analysed against the ordering rule as described above in relation to Figure 5. Hence it would be possible, in principle, to reject calls that do not conform to the sequence, and hence prevent the spoofed calls from reaching their destination. This real time processing would not be possible when more than one subset is generated since it would require waiting for subsequent calls to be made before the sequence of repeat calls can be tested for.

Since the methods described herein naturally identify the destination of spoofed calls, it would be possible to warn the recipient that a call they have received was suspicious.

In any of the embodiments described herein it may be necessary to coordinate between the legitimate caller and the network operator or observer of the sequence. This is because the operator may need to start observing calls from the start of the sequence. If a network operator were to start observing part way through the sequence, a repeat call to a number will look like the first call to that number, and will therefore appear to be a spoofed call.

Various methods of coordination may be provided, and may be implemented with any embodiment of the invention as appropriate. An out-of-bound mechanism may be provided for the caller to signal to the operator when a new call sequence has been started. Alternatively, the caller may make a pre-agreed sequence of calls (e.g. to some dummy numbers) to indicate that the sequence has been started. The operator may look for this sequence of calls in the call traffic and recognise it as a 'start of sequence' indicator. Alternatively, the network operator may ignore the first occurrence of any destination number before continuing with the analysis as described in relation to Figure 5, by checking subsequent subsets of calls for conformity with the ordering rule. Such a method allows the observer to synchronise with the call sequence without knowing where it started.

Simulations may be conducted to explore spoof detection performance using the processing method according to the present invention, under more realistic conditions. In a simulated traffic, it may comprise of the following: genuine calls to 50,000 unique destinations with a subset of those receiving up to around 4 repeat calls, and spoofed calls to 500 destinations with around 20% repeat calls. Therefore, a set up of 600 spoofed calls in total may be entered into this simulation.

The output from the simulation is shown below:

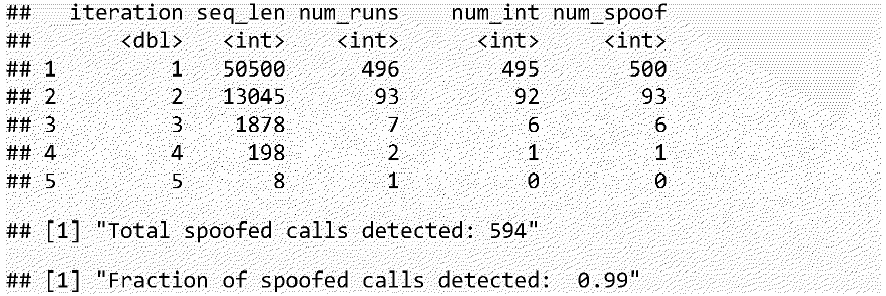

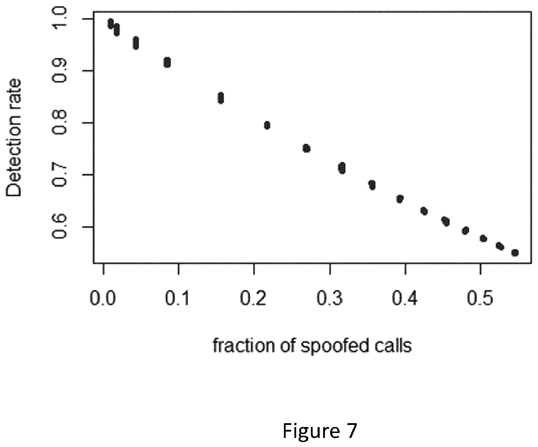

The 'iteration' column indicates which pass (e.g. subset of calls) is being made through the observed calls. The 'seq_len' column is the length of the sequence being considered in a given pass (e.g. subset of calls). The 'num_runs' is the number of descending runs seen in the sequence. The 'num_int' is the number if interruptions to the descending sequence (equivalent to num_runs - 1). The `num_spoof' is the true number of spoofed calls in the sequence in the given pass (e.g. subset of calls). By summing 'seq_len', it may be determined that there are a total of 65,629 calls including genuine and spoofed calls. The sum of 'num_int' is 594 which is an estimation of the number of spoofed calls detected. This is compared with the actual number, 600, of spoofed calls entered into this simulation. Therefore, a detection rate may be calculated: 594/600, i.e. 99%. In this simulation the fraction of calls that are spoofed is fixed (at around 10%). Further simulations may be conducted, varying the fraction of spoofed calls, and the results are shown in Figure 7.

Figure 7 is a simulation plot of detection rate of spoofed calls with respect to the proportion of spoofed calls, showing an efficiency of the processing method according to embodiments of the present invention. At low levels of spoofed calls, the detection rate may approach 100%. The detection rate may decline smoothly as the fraction of spoofed calls in the network increases. However, in spite of the high volume of spoofed calls as the fraction of spoofed calls increases, a detection rate of the spoofed calls over 50% may still be achieved as shown in Figure 7.

In the limit, the method only needs to detect a single spoofed call to declare that spoofing is taking place. In practice, a slightly higher threshold may be set. Nevertheless, at high volumes of spoofed calls, the chances of all such calls being missed is negligible.

It will be understood that, by allowing the presence of spoofed calls for a telephone number to be detected, the above-described methods may enable an identity of an owner or authorised user of the telephone number to be better asserted on the voice network. These methods may also allow some of the spoofed calls to be screened, reducing a load on the network and potentially reducing fraud or the impact of any denial of service attacks utilising spoofed Caller IDs. Furthermore, these methods can operate using customers' existing telephone equipment and do not require the receiving customers (that is the numbers which are called by an owner of a telephone number or a spoof caller) to adapt in any way in order to provide these benefits. Additionally, these methods can be used by a network operator without needing to introduce any new in-network signalling systems.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of processing calls in a telephone network, the method comprising:
identifying a plurality of calls that have been made by a particular telephone number to destination telephone numbers in the telephone network;
dividing the plurality of calls into one to N subsets of calls corresponding to a first to Nth occurrence of the calls to the destination telephone numbers, wherein the first subset of calls includes a sequence of the calls to the destination telephone numbers occurring for a first time;
determining whether the sequence of calls in at least one of the subsets of calls corresponds to a correct order for calling those destination telephone numbers, wherein the correct order is determined based on a predetermined rule for ordering destination telephone numbers in the telephone network and wherein a party that is authorised to use the particular telephone numbers follows the correct order; and
determining that one or more of the calls were made by spoofing the particular telephone number if the sequence in which the calls in the at least one subset were placed does not correspond to a correct order.

2. The computer implemented method of claim 1 wherein:
a Nth subset of calls includes a sequence of the calls to the destination telephone numbers occurring for a Nth time, the method further comprising:
determining whether the sequence in each of the N subsets of calls separately corresponds to a correct order for calling those destination telephone numbers, wherein the correct order is determined based on the predetermined rule for ordering destination telephone numbers in the telephone network; and
determining that one or more of the calls were made by spoofing the particular telephone number if the sequence in which the calls in any subsets of the N subsets were placed does not correspond to a correct order.

3. The method of claim 1 or 2, wherein:
determining whether the sequence of calls in a subset of calls separately corresponds to a correct order for calling those destination telephone numbers comprises:
comparing in turn each subset of the first to Nth subsets to the predetermined rule or correct order for calling destination telephone numbers in the telephone network.

4. The method of any one of preceding claims, wherein the method further comprises
classifying any calls that follow the correct order in any of the first to N subsets of calls as being legitimate calls or likely legitimate calls.

5. The method of any one of preceding claims, wherein the method further comprises:
classifying any calls that break the correct order in any of the first to N subsets of calls as being spoof calls.

6. The method of any one of the preceding claims, wherein the method further comprises:
sharing a secret with the party that is authorised to use the particular telephone number, the secret determining the ordering of a set of telephone numbers.

7. The method of claim 6 , wherein sharing the secret with the party that is authorised to use the particular telephone number comprises receiving the secret from the party.

8. The method of claim 7, wherein sharing the secret with the party that is authorised to use the particular telephone number comprises providing the secret to the party.

9. The method of any preceding claim, wherein the secret comprises an operation that produces a numerical value from a telephone number, and wherein the predetermined rule is based on the respective numerical values produced by the operation for each of the called destination telephone numbers.

10. The method of claim 9, wherein the predetermined rule places the respective numerical values for each of the called telephone numbers in either ascending or descending order.

11. The method of any one of claims 6 to 10, wherein the secret comprises a cipher or a hashing function.

12. The method of any one of the preceding claims, wherein the method further comprises:
causing one or more predetermined actions to be taken in response to determining that one or more of the calls were made by spoofing the particular telephone number.

13. The method of claim 12, wherein the one or more predetermined actions comprise:
notifying the party which is authorised to use the particular telephone number that calls are being made by spoofing that telephone number;
recording data relating to the spoofed calls; or
taking action to prevent further spoof calls.

14. A computer system comprising a processor and a memory storing computer program code for performing the steps of any one of the preceding claims.

15. A computer program which, when executed by one or more processors, is arranged to carry out a method according to any one of claims 1 to 13.
